Europäisches Patentamt

European Patent Office

Office européen des brevets

(19)

(11) Numéro de publication : **0 454 570 A1**

# DEMANDE DE BREVET EUROPEEN

(12)

(21) Numéro de dépôt : 91401079.8

(22) Date de dépôt : 23.04.91

(51) Int. Cl.⁵ : **G06K 19/067, G07F 7/08**

(30) Priorité : 25.04.90 FR 9005258

(43) Date de publication de la demande :
30.10.91 Bulletin 91/44

(84) Etats contractants désignés :
CH DE LI

(71) Demandeur : SOCIETE D'APPLICATIONS
GENERALES D'ELECTRICITE ET DE
MECANIQUE SAGEM
6, Avenue d'Iéna
F-75783 Paris Cédex 16 (FR)

(72) Inventeur : Le Fichous, Patrick
rue de Ribeauvillé
F-60149 St-Crépin-Ibouvillers (FR)

(74) Mandataire : Bloch, Gérard et al
2, square de l'Avenue du Bois
F-75116 Paris (FR)

(54) Dispositif anti-fraude pour lecteur d'objets portatifs pourvus chacun d'un circuit électronique de mémorisation.

(57)    Une cavité (11), dans laquelle règne un champ électromagnétique haute fréquence, est disposée, sur le trajet d'introduction de l'objet portatif dans le lecteur, en amont du dispositif de prélèvement (3) prévu sur le lecteur pour prélever les signaux électriques sur le circuit électronique (21) de l'objet portatif. Si une connexion conductrice (25), prévue par un fraudeur pour leurrer le lecteur à l'aide d'un ordinateur portable, par exemple, traverse cette cavité (11), elle se comporte comme une antenne, qui capte un signal à la fréquence du champ électromagnétique. Le signal capté se retrouve parmi les signaux prélevés et sa détection commande l'inhibition du lecteur.

L'invention s'applique notamment aux lecteurs pour objets portatifs connus sous le nom de "cartes à puces".

EP 0 454 570 A1

Jouve, 18, rue Saint-Denis, 75001 PARIS

FIG.1

La présente invention a pour objet un dispositif anti-fraude pour lecteurs d'objets portatifs pourvus chacun d'un circuit électronique de mémorisation de données d'identification.

La présente invention s'applique notamment aux objets portatifs connus sous le nom de "cartes à mémoire" ou encore "cartes à puce" et qui comprennent une carte de type carte bancaire ou téléphonique, pourvue d'un circuit intégré utilisé pour mémoriser, entre autres, des données d'identification. L'invention s'applique également à d'autres types d'objet portatif, comme des badges, des clés, des stylos, et ainsi de suite, pourvus chacun d'un tel circuit.

A l'heure actuelle, les lecteurs de carte à mémoire ne sont pas protégés contre les fraudeurs qui tentent, parfois avec succès, de leurrer les circuits de traitement du lecteur à l'aide d'un ordinateur portable relié par un ou plusieurs fils, aux contacts du circuit électronique d'une carte. En introduisant une carte ainsi truquée dans le lecteur, l'ordinateur portable se trouve en communication avec les circuits de traitement du lecteur, ce qui permet au fraudeur de tromper ces derniers, et de se faire autoriser des opérations non permises.

La présente invention vise à pallier l'inconvénient précédent, en procurant un dispositif anti-fraude qui permet de détecter, lorsqu'une carte ou un objet analogue est introduite dans un lecteur, la présence d'une connexion conductrice entre les contacts du circuit électronique de la carte et l'extérieur du lecteur.

A cet effet, elle a pour objet un dispositif anti-fraude pour lecteur d'objets portatifs pourvus chacun d'un circuit électronique de mémorisation de données d'identification, ledit lecteur comprenant des moyens de prélèvement, pour prélever des signaux électriques sur ledit circuit électronique lorsque ledit objet portatif est introduit dans ledit lecteur, et des moyens de traitement, pour traiter les signaux prélevés et autoriser une opération au porteur dudit objet portatif après vérification des données d'identification, ledit dispositif anti-fraude comprenant :

    – une cavité, dans laquelle règne un champ électromagnétique haute fréquence et disposée en amont desdits moyens de prélèvement sur le trajet d'introduction dudit objet portatif dans ledit lecteur, et,

    – des moyens de détection pour détecter, parmi les signaux prélevés, un signal à la fréquence dudit champ électromagnétique, et pour inhiber lesdits moyens de traitement en cas de détection.

Dans le dispositif de l'invention, toute connexion conductrice qui traverse la cavité se comporte comme une antenne à la réception et capte une partie de l'énergie du champ haute-fréquence. Cette énergie donne naissance à un signal à la fréquence du champ électromagnétique parmi les signaux prélevés. La présence d'un tel signal signifie qu'une connexion traverse la cavité. La détection de ce signal est donc suivie de l'inhibition du circuit de traitement, et éventuellement du déclenchement d'une alarme. Par haute fréquence, il faut entendre ici la gamme de fréquence dont les longueurs d'onde, dans l'air, sont décimétriques, métriques et décamétriques, c'est-à-dire la gamme comprise entre sensiblement 10 MHz et sensiblement 1 GHz.

Dans la forme de réalisation préférée, ledit champ électromagnétique haute fréquence est modulé par un signal basse fréquence, et lesdits moyens de détection comprennent des moyens de démodulation du signal à la fréquence dudit champ électromagnétique et des moyens de détection du signal basse fréquence.

Dans ce cas, les circuits électroniques de détection sont simples et d'un coût relativement faible.

Dans une autre forme de réalisation, la fréquence dudit champ électromagnétique est variable au cours du temps.

Cette caractéristique permet de déjouer à coup sûr les manoeuvres d'un fraudeur qui tenterait de perturber le fonctionnement du dispositif anti-fraude à l'aide d'un circuit oscillant accordé sur la fréquence du champ électromagnétique, qui serait raccordé à la connexion parasite pour atténuer le signal utile à la fréquence du champ électromagnétique.

Avantageusement, les dimensions des orifices de passage dudit objet portatif au travers des parois de ladite cavité sont telles que ledit champ électromagnétique ne peut traverser ces orifices qu'en subissant une forte atténuation.

Par exemple, les dimensions des orifices sont choisies pour que ceux-ci, tout en permettant le passage de l'objet portatif, se comportent, vis à vis du champ électromagnétique, comme des tronçons de guides d'ondes en dessous de la coupure, donc atténuant fortement le champ qui les parcourt. Dans ce cas, le signal à la fréquence du champ qui se trouve parmi les signaux prélevés ne provient que de la présence de la connexion frauduleuse, ce qui améliore le rapport signal sur bruit du dispositif. De plus, le champ électromagnétique qui pourrait se trouver rayonné à l'extérieur de la cavité est alors négligeable.

Dans une forme de réalisation, lesdits moyens de prélèvement comprennent une pluralité de contacts de prélèvement coopérant chacun avec un contact dudit circuit électronique, et lesdits moyens de détection comprennent un unique circuit de détection pourvu d'une entrée reliée, par l'intermédiaire d'une pluralité de condensateurs, à chacun desdits contacts de prélèvement.

Cette forme de réalisation est simple et économique.

Dans une autre forme de réalisation, lesdits moyens de détection comprennent autant de circuits de détection qu'il y a de contacts de prélèvement, l'entrée de chaque circuit de détection étant reliée à un contact de prélèvement et sa sortie à une entrée d'un unique circuit de sommation.

Dans ce cas, il n'y a aucun risque de voir, en fonctionnement normal, les signaux prélevés passer d'une connexion à l'autre par couplage capacitif, comme cela peut arriver dans la forme de réalisation précédente.

Dans une encore autre forme de réalisation, lesdits moyens de prélèvement comprennent une boucle disposée au voisinage dudit circuit électronique lorsque ledit objet portatif est introduit dans le lecteur.

La présente invention sera mieux comprise à la lecture de la description suivante de la forme de réalisation préférée du dispositif anti-fraude de l'invention, et de ses variantes, faite en se référant aux dessins annexés, sur lesquels :

 – la figure 1 représente une vue éclatée, en perspective, des principaux éléments du dispositif de l'invention,

 – la figure 2 représente une première forme de réalisation du circuit de détection du dispositif de la fig. 1,

 – la figure 3 représente une deuxième forme de réalisation du circuit de détection du dispositif de la fig. 1, et,

 – la figure 4 représente une troisième forme de réalisation du circuit de détection du dispositif de la figure 1.

Un dispositif anti-fraude pour lecteur d'objets portatifs, en l'occurrence un lecteur de cartes à mémoire, est maintenant décrit. Plus précisément, et comme cela a été expliqué, le dispositif de l'invention permet de détecter la présence d'une connexion conductrice entre les contacts reliés aux circuits de traitement du lecteur et le milieu extérieur, connexion qui permet à un fraudeur de leurrer ces circuits, à l'aide d'un ordinateur portable par exemple.

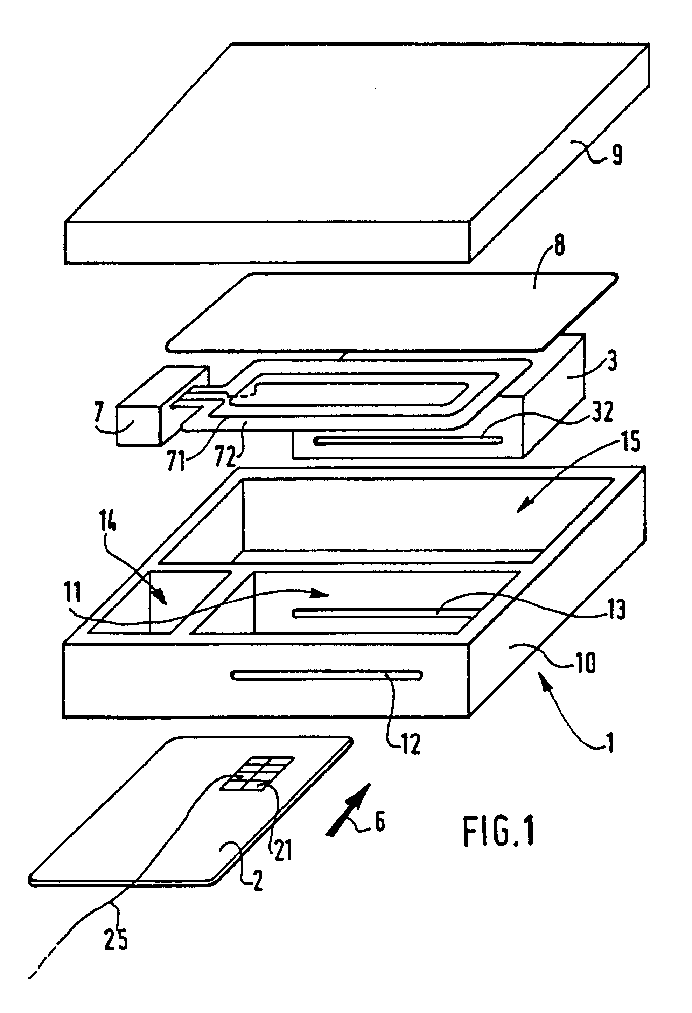

En référence à la figure 1, le dispositif anti-fraude 1 comprend un boîtier 10, ici métallique, dont le volume intérieur est cloisonné en trois cavités 11, 14 et 15.

Le boîtier 10 comprend, du côté dirigé vers l'utilisateur du lecteur, un orifice, en l'occurrence une fente 12, qui permet l'introduction de la carte 2 de l'utilisateur. La fente 12 débouche dans la cavité 11, qui comporte, dans la paroi opposée à celle dans laquelle est pratiquée la fente 12, une fente 13 identique débouchant dans la cavité 15. Dans la cavité 15 est disposé un dispositif de prélèvement 3, pourvu d'une fente d'introduction 32.

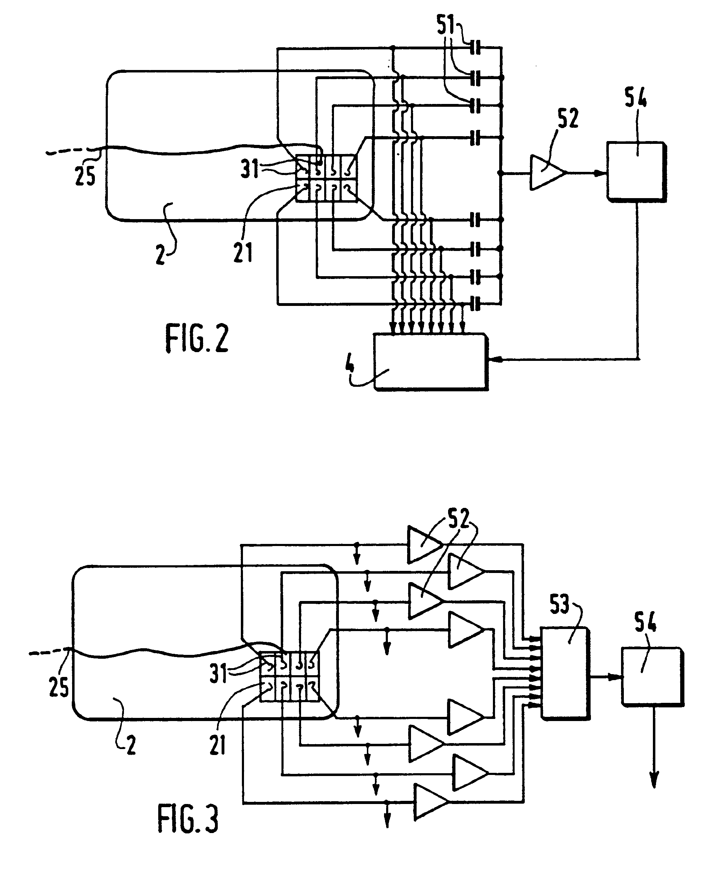

De façon connue, la carte 2 de l'utilisateur comporte un circuit électronique intégré 21 pourvu d'une pluralité de contact d'accès, et destiné à mémoriser au moins des données d'identification. Le dispositif de prélèvement est du type connu qui comprend autant de lames souples qu'il y a de contact d'accès au circuit électronique 21, chaque lame souple formant un contact de prélèvement qui vient coopérer avec un contact d'accès correspondant au circuit 21 lorsque la carte 2 est insérée dans le dispositif de prélèvement 3. Les lames souples ne sont pas visibles sur la figure 1, mais elles sont représentées schématiquement sur les figures 2, 3 et 4 où elles portent la référence 31.

Lorsque la carte 2 est introduite à fond dans la fente 12, selon la flèche 6, elle traverse donc la cavité 11, puis la fente 13 et, dans la cavité 15, elle pénètre dans le dispositif de prélèvement 3 par la fente 32. Lorsque l'extrémité de la carte 2 qui porte le circuit 21 vient en butée contre le fond du dispositif de prélèvement 3, les lames souples formant contacts de prélèvement 31 viennent coopérer avec les contacts d'accès au circuit 21.

Une cavité 14, contiguë à la cavité 11, est destinée à recevoir un oscillateur haute fréquence 7, dont la fréquence est ici égale à 100 MHz. Le signal de sortie de l'oscillateur 7 est appliqué à une antenne, comprenant une piste conductrice 71 déposée sur un substrat isolant 72. Le substrat isolant 72 est de la taille de la cavité 11 et vient, en fonctionnement normal, la coiffer. La piste conductrice 71 est ici en forme de spirale qui s'étend sur toute la surface du substrat 72.

Un circuit imprimé 8, relié, de façon non représentée sur la figure 1 dans un souci de simplicité, d'une part à l'oscillateur 7, et d'autre part au dispositif de prélèvement 3, est disposé dans la cavité 15.

Un couvercle 9 ferme le boîtier 10.

Avant de décrire plus en détail les composants et le fonctionnement du circuit 8, le fonctionnement d'ensemble du dispositif qui vient d'être décrit est maintenant abordé.

En fonctionnement normal, l'oscillateur 7 et l'antenne 71 font régner, à l'intérieur de la cavité 11, un champ électromagnétique haute fréquence, ici à 100 MHz. Lorsqu'un fraudeur introduit une carte 2 sur laquelle il a soudé une connexion conductrice 25 reliée par exemple à un ordinateur portable non représenté, cette connexion 25 traverse obligatoirement la cavité 11, du fait que celle-ci est disposée en amont du dispositif de prélèvement 3 sur le trajet d'introduction de la carte 2.

La connexion 25 forme antenne, capte une partie de l'énergie du champ électromagnétique dans la cavité 11, et il en résulte un signal à 100 MHz sur le contact de prélèvement 31 qui vient coopérer avec le contact d'accès au circuit 21 relié à la connexion 25. Pour détecter la présence de cette connexion 25, il suffit donc de rechercher un signal à 100 MHz parmi les signaux prélevés par les contacts de prélèvement 31. En cas de détection d'un tel signal, on inhibe les circuits de traitement du lecteur, normalement destinés à autoriser, après vérification des données d'identification, une opération tel qu'un retrait d'argent, par exemple. Le cas échéant, on déclenche une alarme.

Ici, le champ électromagnétique reste confiné à l'intérieur de la cavité 11 malgré les orifices 12 et 13, car ceux-ci sont de dimensions notablement inférieures à la demi-longueur d'onde, et sont pratiqués dans des parois relativement épaisses. Ils se comportent donc, pour le champ électromagnétique, comme des guides d'ondes très en dessous de leur fréquence de coupure basse. Il en résulte que celui-ci ne peut traverser ces orifices 12 et 13 qu'en subissant une forte atténuation. Lorsque l'objet portatif n'est pas une carte, mais une clé ou un objet cylindrique, les conditions ci-dessus restent faciles à respecter, tant que les dimensions de l'objet portatif restent raisonnables.

Sur la figure 1, il est important de faire la différence entre le rôle de la paroi qui sépare les cavités 11 et 15 et le rôle de la paroi qui sépare les cavités 11 et 14. La paroi qui sépare les cavités 11 et 15 a un rôle d'écran électromagnétique destiné à empêcher le champ qui règne dans la cavité 11 de parvenir dans la cavité 15 autrement que par l'intermédiaire de la connexion 25 formant antenne. Par contre, la paroi qui sépare les cavités 11 et 14 a un simple rôle de barrière mécanique, pour protéger l'oscillateur 7 des objets divers susceptibles d'être introduits par l'orifice 12.

Ici, dans le but de simplifier les opérations de détection, le signal de sortie de l'oscillateur 7 est modulé en amplitude par un signal basse fréquence, c'est-à-dire dont la fréquence est ici inférieure à sensiblement 100 kHz.

En référence maintenant à la figure 2, et dans une première forme de réalisation, le circuit 8 comprend un unique circuit 52 de préamplification et de démodulation pourvu d'une entrée reliée, par l'intermédiaire d'une pluralité de condensateurs 51, à chacun des contacts de prélèvement 31.

Chacun des contacts de prélèvement 31 est par ailleurs relié au circuit de traitement 4 dont il a été question et qui est destiné, en fonctionnement normal, à vérifier les données mémorisées dans le circuit 21.

Le circuit 52 est suivi d'un circuit 54 de détection du signal basse fréquence qui a servi à moduler le signal de sortie de l'oscillateur 7. La sortie du circuit 54 est reliée à une entrée d'inhibition du circuit de traitement 4.

Dans la forme de réalisation de la figure 2, la présence des condensateurs 51, tous reliés à l'entrée du circuit 52, peut cependant introduire un couplage entre les signaux prélevés, préjudiciable au bon fonctionnement du circuit de traitement 4, même en l'absence de connexion 25.

La forme de réalisation de la figure 3 ne souffre pas de cet inconvénient. A cet effet, elle comprend autant de circuit 52 qu'il y a de contacts de prélèvement 31, l'entrée de chaque circuit 52 étant reliée à un contact de prélèvement 31 correspondant, et sa sortie étant reliée à une des entrées d'un circuit de sommation 53, suivi du circuit 54 déjà décrit, lui-même relié au circuit 4 non représenté dans un souci de simplicité. Dans ce cas, il n'y a aucun couplage parasite entre les contacts de prélèvement et le circuit 4 fonctionne comme en l'absence de dispositif anti-fraude.

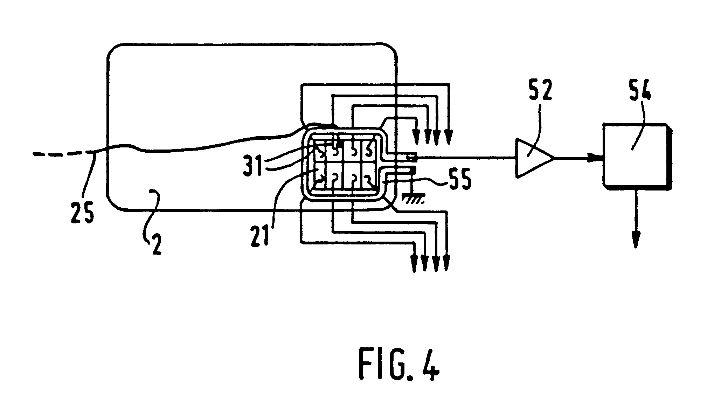

Dans la forme de réalisation de la figure 4, le dispositif de prélèvement 3 comprend une boucle 55 formant antenne, disposée au voisinage du circuit 21 lorsque la carte 2 est introduite dans le lecteur. Dans ce cas, il n'y a pas de contact entre la boucle 55 et les contacts de prélèvement 31. La boucle 55 est suivie des circuits 52 et 54 comme dans le cas de la figure 1.

Naturellement, la portée de la présente demande n'est pas limitée à la forme de réalisation qui vient d'être décrite. C'est ainsi que si la modulation du champ électromagnétique dans la cavité 11 facilite la détection ultérieure du signal ramené par la connexion 25, ceci n'est pas obligatoire, et on pourrait également utiliser un champ haute fréquence non modulé, en détectant directement le signal à la fréquence du champ, éventuellement après une amplification haute fréquence.

Comme cela a déjà été signalé, il serait possible de faire varier la fréquence du signal de sortie de l'oscillateur 7, à la manière de celle d'un wobulateur, pour déjouer toute tentative d'absorption du signal capté par la connexion 25 à l'aide d'un circuit bouchon accordé, par exemple.

Il serait possible d'utiliser d'autres types d'antenne que l'antenne inductive 71, et notamment une antenne capacitive.

Il est à noter qu'il n'est pas nécessaire que la connexion 25 soit métallique pour être détectée. C'est ainsi que, même si elle est réalisée en carbone, ou à l'aide d'une peinture conductrice, le dispositif anti-fraude de l'invention reste efficace.

## Revendications

1. Dispositif anti-fraude (1) pour lecteur d'objets portatifs (2) pourvus chacun d'un circuit électronique (21) de mémorisation de données d'identification, ledit lecteur comprenant des moyens de prélèvement (3), pour prélever des signaux électriques sur ledit circuit électronique (21) lorsque ledit objet portatif (2) est introduit dans ledit lecteur, et des moyens de traitement (4), pour traiter les signaux prélevés et autoriser une opération au porteur dudit objet portatif (2) après vérification des données d'identification, ledit dispositif anti-fraude comprenant :

   – une cavité (11), dans laquelle règne un champ électromagnétique haute fréquence et disposée en amont desdits moyens de prélèvement (3) sur le trajet d'introduction dudit objet portatif (2) dans ledit lecteur, et,
– des moyens de détection (51, 52, 54; 52, 53, 54; 55, 52, 54), pour détecter, parmi les signaux prélevés, un signal à la fréquence dudit champ électromagnétique, et pour inhiber lesdits moyens de traitement (4) en cas de détection.

2. Dispositif selon la revendication 1, dans lequel ledit champ électromagnétique haute fréquence est modulé par un signal basse fréquence, et lesdits moyens de détection comprennent des moyens de démodulation (52) du signal à la fréquence dudit champ électromagnétique et des moyens (54) de détection du signal basse fréquence.

3. Dispositif selon l'une des revendications 1 ou 2, dans lequel la fréquence dudit champ électromagnétique est variable au cours du temps.

4. Dispositif selon l'une des revendications 1 à 3, dans lequel les dimensions des orifices (12, 13) de passage dudit objet portatif (2) au travers des parois de ladite cavité (11) sont telles que ledit champ électromagnétique ne peut traverser ces orifices (12, 13) qu'en subissant une forte atténuation.

5. Dispositif selon l'une des revendications 1 à 4, dans lequel lesdits moyens de prélèvement (3) comprennent une pluralité de contacts de prélèvement (31) coopérant chacun avec un contact dudit circuit électronique (21).

6. Dispositif selon la revendication 5, dans lequel lesdits moyens de détection comprennent un unique circuit de détection (52) pourvu d'une entrée reliée, par l'intermédiaire d'une pluralité de condensateurs (51), à chacun desdits contacts de prélèvement (31).

7. Dispositif selon la revendication 5, dans lequel lesdits moyens de détection comprennent autant de circuits de détection (52) qu'il y a de contacts de prélèvement (31), l'entrée de chaque circuit de détection (52) étant reliée à un contact de prélèvement et sa sortie à une entrée d'un unique circuit de sommation (53).

8. Dispositif selon l'une des revendications 1 à 4, dans lequel lesdits moyens de prélèvement comprennent une boucle (55) disposée au voisinage dudit circuit électronique (21) lorsque ledit objet portatif (2) est introduit dans le lecteur.

FIG.1

FIG.2

FIG.3

FIG. 4

Office européen **RAPPORT DE RECHERCHE EUROPEENNE** Numero de la demande
· des brevets

EP 91 40 1079

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. CL5) |
|---|---|---|---|
| Y | FR-A-2 554 262 (FLONIC)<br>* document en entier *<br>--- | 1,5 | G 06 K 19/067<br>G 07 F 7/08 |
| Y | EP-A-0 022 390 (IMPHY S.A.)<br>* abrégé; figures 2,3 *<br>--- | 1,5 | |
| P,X | FR-A-2 646 260 (ELECTRONIQUE SERGE DASSAULT)<br>* document en entier *<br>--- | 1,5 | |
| A | US-A-4 388 524 (C.A. WALTON)<br>* abrégé; figure 1 *<br>--- | 1,2 | |
| A | EP-A-0 183 523 (TOYOTA)<br>* page 16, paragraphe 2 - page 17, dernier paragraphe; figure 10 *<br>----- | 1 | |

**DOMAINES TECHNIQUES RECHERCHES (Int. CL5)**

G 06 K 7/00
G 06 K 19/00
G 07 F 7/00
H 01 Q 1/00

Le présent rapport a été établi pour toutes les revendications

| Lieu de la recherche | Date d'achèvement de la recherche | Examinateur |
|---|---|---|
| BERLIN | 12-06-1991 | DUCREAU F B |